# EUROPEAN PATENT APPLICATION

(11) **EP 2 882 057 A1**
(43) Date of publication of application: **10.06.2015**
(21) Application number: 13828600.0
(22) Date of filing: 02.08.2013
(51) Int. Cl.: H02G 3/22, B60R 16/02, H01B 17/58

(54) **GROMMET**

(30) Priority: 06.08.2012 JP 2012173704
(71) Applicant: Yazaki Corporation, Tokyo 108-0073 (JP)
(72) Inventor: ASAYAMA, Masahiko, Hiroshima-shi Hiroshima 732-0045 (JP)
(74) Representative: Hoffmann Eitle
(86) International application number: PCT/JP2013/070966
(87) International publication number: WO 2014/024785

(57) **Abstract**

A grommet (1) to be inserted into a mounting hole (6) of a panel (4) includes a grommet inner (3) and a grommet outer (2) assembled to the grommet inner (3) so as to cover the grommet inner (3). The grommet outer (2) includes: electrical cable insertion tubes (10) each through which an electrical cable is inserted; a flange (12) integrally formed with the electrical cable insertion tubes (10) and positioned facing the opening edge (8) of the mounting hole (6); and an annular lip (14) extending from the flange (12) and positioned in close abutment against the opening edge (8). The annular lip (14) is provided with a pressing part (34) for pressing the annular lip (14) against the opening edge (8) of the mounting hole (6), when the grommet inner (3) and the grommet outer (2) in the assembled state have been inserted into the mounting hole (6) and the flange (12) and the annular lip (14) are urged into abutment.

## Description

### TECHNICAL FIELD

The present invention relates to a grommet mounted on a through hole provided on a panel and prevents water entry from the periphery of an electrical cable that passes through the through hole.

### BACKGROUND

In a vehicle, many electronic parts are mounted and multiple electrical cables are disposed from an engine room and the like to the interior of the vehicle in order to control or activate such electronic parts. Infiltration of rainwater and the like to the interior of the vehicle is blocked by a grommet for inserting the electrical cables disposed from the engine room and the like to the interior through a panel.

As a conventional example, PTL 1 proposes a grommet fitting structure in which a generally annular lip part for sealing which is liquid-tightly pressed against a fitting member is provided at a joining surface facing the fitting member such as a panel. In the structure of the conventional example, a protruding bar which is liquid-tightly held in contact with the fitting member is further formed at the inner circumference side of the lip part for sealing, and a first surface on which the lip part for sealing contacts and a second surface on which the protruding bar for sealing contacts among the contacting surface of the fitting member are provided with a height difference in the direction perpendicular to these surfaces. At the time of fitting the grommet with the through hole, the lip part for sealing and the protruding bar for sealing become in close contact with the fitting member to form dual sealing portions having a level difference at the fixed portion of the grommet and the fitting member.

### CITATION LIST

### Patent literature

PTL 1: JP2003-164041 A

### SUMMARY OF INVENTION

In the grommet of the conventional example, water cut-off performance can be secured since the dual sealing portions are formed. However, when assembling the grommet to the fitting member, the protruding bar for sealing needs to be pressed so as to fit. For that reason, a strong pressing force for pressing the protruding bar for sealing is needed and it was not easy to assemble the grommet to the fitting member.

Therefore, it is an object of the present invention to provide a grommet which can be easily assembled to a through hole and which can prevent infiltration of water and the like into the grommet and which can cut-off water securely.

To achieve the object, a grommet according to a first aspect of the invention to be inserted into a mounting hole of a panel includes a grommet inner and a grommet outer assembled to the grommet inner so as to cover the grommet inner. The grommet outer includes: an electrical cable insertion tube through which an electrical cable is inserted; a flange integrally formed with the electrical cable insertion tube and positioned facing an opening edge of the mounting hole; and an annular lip extending from the flange and positioned in close abutment against the opening edge of the mounting hole.

A pressing part for pressing the annular lip against the opening edge of the mounting hole by inserting the grommet inner and the grommet outer in an assembled state into the mounting hole to urge the flange and the annular lip into abutment is provided at least on the annular lip or on the flange.

By providing such a pressing part, it is possible to prevent infiltration of water into the grommet and it is possible to cut off water securely.

The flange preferably includes a base wall protruding from the electrical cable insertion tube toward an outer circumference side; an outer circumference wall integrally formed at a tip end of the base wall; and a free end wall extending from the outer circumference wall in the same direction as the base wall. The annular lip preferably includes: a bending annular wall extending from an edge of the free end wall toward the outer circumference wall side; and an abutting annular portion provided at a tip end of the bending annular wall. It is preferable that the pressing part is provided at the abutting annular portion.

By providing the pressing part on the annular portion, it is possible to prevent infiltration of water into the grommet more securely and it is possible to cut off water securely.

It is preferable that an assembly inner circumference groove is provided between the base wall and the free end wall, and an assembly outer circumference wall provided on the grommet inner is inserted into the assembly inner circumference groove. Moreover, it is preferable that the pressing part is pressed against an edge on the free end wall side of the outer circumference wall.

By inserting the assembly outer circumference wall into the assembly inner circumference groove, it is possible to limit deflection of the free end wall. Also, the outer circumference wall bends by the pressing part provided on the abutting annular portion being pressed against an edge on the free end wall side of the outer circumference wall. Therefore, it is easier to assemble the grommet, and at the same time, it is possible to support the panel more rigidly.

In other words, when the grommet inner and the grommet outer are assembled and are inserted into the mounting hole of the panel, the abutting annular portion abuts the opening edge of the panel and the pressing part is pressed toward the flange side whereas the assembly outer circumference wall is inserted in the assembly inner circumference groove. For that reason, the free end wall is prevented from bending toward the basal portion side. Therefore, since the free end wall does not bend toward the basal portion side by assembling the grommet to the panel with the assembly outer circumference wall being inserted into the assembly inner circumference groove, it is possible to press the pressing part formed at the edge of the bending annular wall against the flange more rigidly. Therefore, it is possible to prevent infiltration of water into the grommet and it is possible to cut off water securely.

### BRIEF DESCRIPTION OF DRAWINGS

Fig. 1(a) is a general view of a grommet according to an embodiment and Fig. 1(b) is an enlarged view of a main part of the grommet according to the embodiment.
Fig. 2 is a view illustrating a grommet outer in a state before a grommet inner is assembled in the grommet according to the embodiment.
Fig. 3 is a view illustrating a state in which the grommet outer and the grommet inner are assembled in the grommet according to the embodiment.

### DESCRIPTION OF EMBODIMENTS

Embodiments of the present invention will be explained in detail by referring to the drawings below.

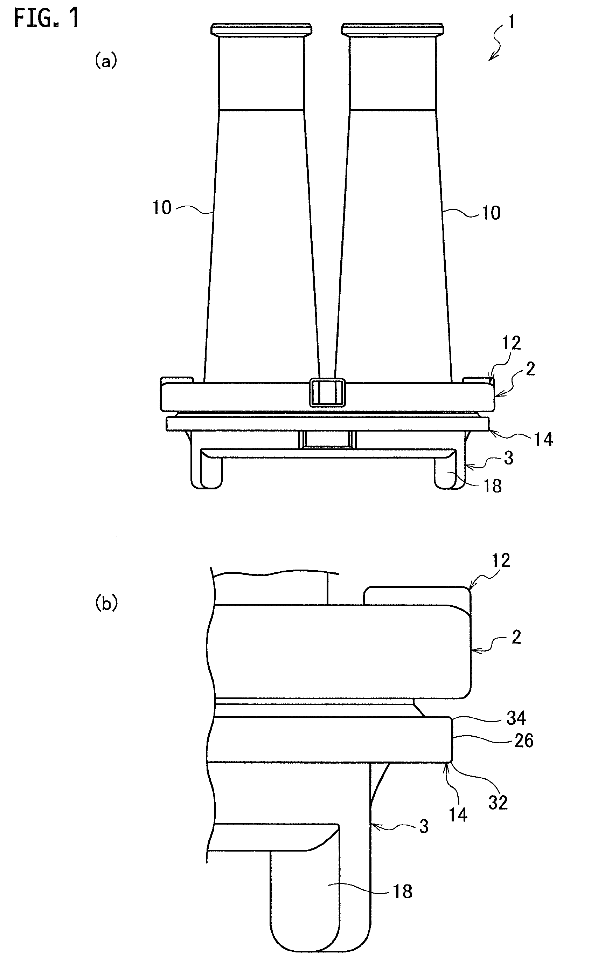

As illustrated in Figs. 1 to 3, a grommet 1 according to an embodiment includes a tubular grommet inner 3 and a grommet outer 2 which is assembled so as to cover the grommet inner 3 and is to be positioned in close abutment with an opening edge 8 of a mounting hole 6 of a panel 4.

The grommet outer 2 includes: electrical cable insertion tubes 10 each of which is soft, integrally formed, and through internal circumference of which an electrical cable is inserted; a flange 12 integrally formed with the electrical cable insertion tubes 10 and positioned facing the opening edge 8 of the mounting hole 6; and an annular lip 14 extending from the flange 12 and positioned in close abutment against the opening edge of the mounting hole 6.

As the electrical cable insertion tubes 10, a plurality of (two in the embodiment) generally cylindrical tubes are formed. An elliptical flange 12 is formed at one end of such tubes. These tubes are formed by diameter reduction from the flange 12 side. As such, the flange 12 is formed integrally with the electrical cable insertion tubes 10.

The flange 12 includes a base wall 24 protruding from the electrical cable insertion tubes 10 toward the outer circumference side, an outer circumference wall 26 integrally formed at a tip end of the base wall 24, and a free end wall 28 extending from the outer circumference wall 26 in the same direction as the base wall 24. One end of the free end wall 28 is connected to the outer circumference wall 26, while the other end is constructed as a free end. The inner side surrounded by the base wall 24, the outer circumference wall 26, and the free end wall 28 constitutes an assembly inner circumference groove 16.

The annular lip 14 is annularly formed continuously at an edge side of the free end side of the free end wall 28. The annular lip 14 includes a bending annular wall 30 having elasticity and extending from the edge on the free end side of the free end wall 28 toward the outer circumference wall side, an abutting annular portion 32 provided at a tip end side of the bending annular wall 30, and a pressing part 34 protruding so as to be thicker toward the flange 12 side.

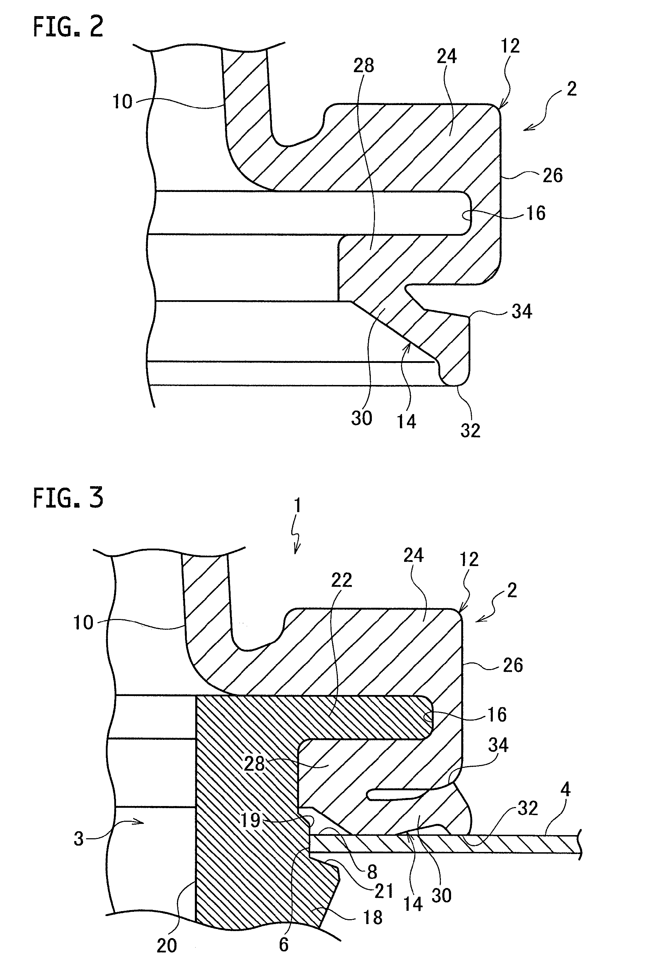

The pressing part 34, as illustrated in Figs. 2 and 3, is formed such that its tip end forms a corner, and it is pressed against an edge on the free end wall 28 side of the outer circumference wall 26. Moreover, the shape of the pressing part 34 may take any form as long as it has a shape that can be pressed against an edge on the free end wall 28 side of the outer circumference wall 26; for example, it can be a shape with a curved surface.

The grommet inner 3 is integrally formed with a hard material that is harder than the grommet outer 2. The grommet inner 3 includes an annularly formed inner body 18, an electrical cable insertion part 20 through which an electrical wire is inserted, a panel support part 21 formed so as to protrude from an outer circumference part 19 of the inner body 18, and an assembly outer circumference wall 22 to be inserted into the assembly inner circumference groove 16 of the grommet outer 2.

When the inner body 18 is inserted into the mounting hole 6 of the panel 4, the panel support part 21 climbs over the mounting hole 6. Then the panel support part 21 abuts the mounting hole 6 of the panel 4 to be supported by the panel 4. The outer circumference of the inner body 18 is inserted into the mounting hole 6 of the panel 4 and abuts the free end wall 28 of the grommet outer 2.

The electrical cable insertion part 20 is formed on the inner circumference side of the inner body 18, through which an electrical cable (not illustrated) is inserted.

The assembly outer circumference wall 22 is formed so as to protrude from the inner body 18 in the direction toward the outer circumference. The assembly outer circumference wall 22 assembles and fixes the grommet outer 2 and the grommet inner 3 by being fitted into the assembly inner circumference groove 16 of the grommet outer 2.

Next, an assembling structure of the grommet 1 will be explained.

First, the assembly outer circumference wall 22 of the grommet inner 3 is fitted into the assembly inner circumference groove 16 of the grommet outer 2, thereby assembling and fixing the grommet inner 3 with the grommet outer 2. The grommet 1 which has been assembled and fixed is inserted from one side of the panel through the mounting hole 6, by which the grommet 1 is supported by the panel 4 by the panel support part 21 climbing over the mounting hole 6 and the outer circumference part 19 abutting the mounting hole 6.

Also, when the grommet 1 is assembled to the mounting hole 6, the abutting annular portion 32 abuts the opening edge 8 of the panel 4 and at the same time the pressing part 34 is pressed upward toward the flange 12 and is pressed against an edge on the free end wall 28 side of the outer circumference wall 26.

As a result, the grommet 1 is assembled to the mounting hole 6 as illustrated in Fig. 3.

The pressing part 34 is provided on the annular lip 14. The pressing part 34 presses the annular lip 14 against the opening edge 8 of the mounting hole 6 by insertion of the grommet inner 3 and the grommet outer 2 in an assembled state through the mounting hole 6 and urging the flange 12 and the annular lip 14 into abutment. Therefore, it is possible to prevent infiltration of water and the like into the grommet 1 and it is possible to cut out water securely.

Since the bending annular wall 30 of the annular lip 14 has elasticity, a force that tries to return toward the panel 4 is applied. Thus, it is possible to assemble the grommet 1 to the panel 4 rigidly.

By providing the abutting annular portion 32 and the pressing part 34 on the annular lip 14, the abutting annular portion 32 is pressed against the panel 4 and the pressing part 34 is pressed against the free end wall 28. Therefore, it is possible to prevent infiltration of water and the like into the grommet 1 more securely and it is possible to cut out water securely.

By inserting the assembly outer circumference wall 22 into the assembly inner circumference groove 16, it is possible to limit deflection of the free end wall 28, and by the pressing part 34 being pressed against an edge on the free end wall 28 side of the outer circumference wall 26, the outer circumference wall 26 bends. Therefore, it becomes possible to assemble the grommet 1 easily and at the same time it is possible to support the panel 4 more rigidly.

In other words, when the grommet inner 3 and the grommet outer 2 are assembled and inserted into the mounting hole 6 of the panel 4, the abutting annular portion 32 abuts the panel 4 and the pressing part 34 is pressed toward the flange 12 side. However, since the assembly outer circumference wall 22 is inserted in the assembly inner circumference groove 16, deflection of the free end wall 28 toward the basal portion 24 side is inhibited. In addition, since the grommet outer 2 is formed with a soft material, when the pressing part 34 is pressed against an edge on the free end wall 28 side of the outer circumference wall 26, the grommet outer 2 tends to bend in the direction opposite from the direction of the insertion.

Therefore, by assembling the grommet 1 to the panel 4 with the assembly outer circumference wall 22 inserted in the assembly inner circumference groove 16, the free end wall 28 does not bend toward the basal portion 24 but when the outer circumference wall 26 formed with a soft material is pressed by the pressing part 34, it tends to bend toward the side opposite from the insertion direction of the grommet 1. For this reason, the grommet 1 can be easily assembled to the panel 4. Further, it becomes possible to press the pressing part 34 formed at the edge of the bending annular wall 30 against the flange 12 rigidly. Therefore, it is possible to prevent infiltration of water and the like into the grommet and it is possible to cut off water securely. Also, once the grommet 1 is assembled to the panel 4, since the outer circumference wall 26 which was bent at the time of insertion tries to return in the direction toward the panel 4 by its reactive force, it presses the pressing part 34 toward the panel 4. Therefore, it is possible to enhance the water cut-off performance between the panel 4 and the grommet 1.

While the pressing part 34 was provided on the annular lip 14 in the embodiment, the pressing part 34 may be provided on the flange 12.

### INDUSTRIAL APPLICABILITY

The present invention can be utilized for a grommet.

## Claims

1. A grommet to be inserted into a mounting hole of a panel, comprising:
a grommet inner; and
a grommet outer assembled to the grommet inner so as to cover the grommet inner,
the grommet outer comprising:
an electrical cable insertion tube through which an electrical cable is inserted;
a flange integrally formed with the electrical cable insertion tube and positioned facing an opening edge of the mounting hole; and
an annular lip extending from the flange and positioned in close abutment against the opening edge of the mounting hole, wherein
a pressing part for pressing the annular lip against the opening edge of the mounting hole by insertion of the grommet inner and the grommet outer in an assembled state into the mounting hole to urge the flange and the annular lip into abutment is provided at least on the annular lip or on the flange.

2. The grommet according to claim 1, wherein
the flange comprises:
a base wall protruding from the electrical cable insertion tube toward an outer circumference side;
an outer circumference wall integrally formed at a tip end of the base wall; and
a free end wall extending from the outer circumference wall in the same direction as the base wall,
the annular lip comprises:
a bending annular wall extending from an edge of the free end wall toward the outer circumference wall side; and
an abutting annular portion provided at a tip end of the bending annular wall, and
the pressing part is provided at the abutting annular portion.

3. The grommet according to claim 2, wherein
an assembly inner circumference groove is provided between the base wall and the free end wall,
an assembly outer circumference wall provided on the grommet inner is inserted into the assembly inner circumference groove, and
the pressing part is pressed against an edge on the free end wall side of the outer circumference wall.
